# EUROPÄISCHE PATENTSCHRIFT

(11) **EP 2 134 586 B1**
(45) Veröffentlichungstag und Bekanntmachung des Hinweises auf die Patenterteilung: **03.11.2010**
(21) Anmeldenummer: 08733241.7
(22) Anmeldetag: 15.04.2008
(51) Int. Cl.: B62D 3/12, B62D 5/22

(54) **ZAHNSTANGE ODER GEWINDESTANGE**
GEAR RACK OR THREADED ROD
CRÉMAILLÈRE OU TIGE FILETÉE

(30) Priorität: 19.04.2007 DE 102007018919; 02.07.2007 DE 102007030674
(43) Veröffentlichungstag der Anmeldung: 23.12.2009
(73) Patentinhaber: ThyssenKrupp Presta Aktiengesellschaft, 9492 Eschen (LI)
(72) Erfinder: BILMAYER, Roman, FL-9493 Mauren (LI); ECKSTEIN, Ralf, A-6800 Feldkirch (AT); KIFORIUK, Alexander, 73061 Ebersbach (DE); BIRKWALD, Frank, 73760 Ostfildern (DE); STANGE, Michael, 70771 Echterdingen (DE)
(74) Vertreter: Hofmann, Ralf U.
(86) Internationale Anmeldenummer: PCT/AT2008/000138
(87) Internationale Veröffentlichungsnummer: WO 2008/128264

(56) Entgegenhaltungen:
- DE-A1- 10 011 140

## Beschreibung

Die Erfindung bezieht sich auf eine Zahnstange oder Gewindestange, insbesondere für eine Lenkvorrichtung für ein Kraftfahrzeug, welche ein erstes stangenförmiges Teil, das als Funktionselement der Zahnstange oder Gewindestange mindestens ein Element zur Umwandlung einer Rotations- in eine Translationsbewegung, insbesondere eine Verzahnung und/oder ein Gewinde für den Eingriff einer Gewindemutter oder eines Gewindetriebs, aufweist, und ein zweites stangenförmiges Teil umfasst, das mit dem ersten stangenförmigen Teil verbunden ist und das vorzugsweise mindestens ein weiteres Funktionselement der Zahnstange oder Gewindestange aufweist, wobei das erste und das zweite stangenförmige Teil jeweils einen an einem Verbindungs-ende des jeweiligen stangenförmigen Teils mündenden Hohlraum aufweisen und die Verbindung des ersten mit dem zweiten stangenförmigen Teil über ein separates Verbindungsteil erfolgt, welches erste und zweite Verbindungszapfen aufweist, von denen der erste Verbindungszapfen im am Verbindungsende mündenden Hohlraum des ersten stangenförmigen Teils und der zweite Verbindungszapfen im am Verbindungsende mündenden Hohlraum des zweiten stangenförmigen Teils jeweils durch einen Presssitz gehalten ist.

Zahnstangen oder Gewindestangen, beispielsweise in Lenkvorrichtungen von Kraftfahrzeugen eingesetzte Zahnstangen oder Gewindestangen, weisen üblicherweise verschiedene Funktionsbereiche auf, die jeweils einen Abschnitt der Längserstreckung der Zahnstange oder Gewindestange bilden. Ein Funktionsbereich dient zur Umformung der Drehbewegung, wie sie beispielsweise von einem Steuerrad eines Kraftfahrzeuges in ein Lenksystem eingeleitet wird, in eine Translationsbewegung, wie sie in diesem Beispiel zur Verschwenkung der Räder des Kraftfahrzeuges benötigt wird. Hierzu besitzt ein Funktionsbereich als Funktionselement mindestens eine Verzahnung und/oder ein Gewinde, für den Eingriff einer Gewindemutter, insbesondere Kugelgewindemutter, oder eines Gewindetriebes, insbesondere Kugelgewindetriebes. An ihren Enden in achsialer Richtung weist die Zahnstange oder Gewindestange Funktionselemente auf für eine Befestigung von Elementen, die mit dem Rad verbunden sind, beispielsweise die Spurstangen. Ferner kann in einem weiteren Funktionsbereich beispielsweise zusätzlich zu einer Verzahnung im ersten Funktionsbereich ein Gewinde, z. B. für einen Kugelgewindetrieb, vorhanden sein, um mittels einer auf diesem Gewinde angeordneten Mutter einen Gewindetrieb auszubilden. Dieser Gewindetrieb kann für eine Servounterstützung der Lenkbewegung genutzt werden. Statt dessen kann die Zahnstange oder Gewindestange in mindestens einem weiteren Funktionsbereich auch andere Arten von Funktionselementen aufweisen. Beispielsweise kann an einem Stangenabschnitt der Zahnstange oder Gewindestange ein Kolben für eine Servounterstützung der Lenkung vorhanden sein oder Formelemente zu dessen Befestigung. Auch ein für eine Achsialführung der Zahnstange oder Gewindestange dienender glatter Stangenabschnitt, der eine Lagerfläche bildet, ist als ein solcher Funktionsbereich anzusehen. Zur Ausbildung der verschiedenen Funktionselemente sind bei der Herstellung der Zahnstange oder Gewindestange unterschiedliche Fertigungsschritte durchzuführen.

Um eine bessere Anpassung an die Ausbildung der einzelnen Funktionsbereiche zu ermöglichen, sind bereits Zahnstangen bekanntgeworden, bei denen ein erstes und ein zweites stangenförmiges Teil, welches jeweils ein Funktionselement der Zahnstange aufweist, miteinander verbunden sind. Neben einer bekannten Verschweißung dieser beiden stangenförmigen Teile geht weiterhin aus der WO 2006/066309 A1 auch eine Schraubverbindung der beiden stangenförmigen Teile hervor. Hierbei besitzt ein an einem Teil angebrachter Verbindungszapfen ein Außengewinde und ist in ein Innengewinde eines den Verbindungszapfen aufnehmenden achsialen Hohlraums des anderen stangenförmigen Teils eingeschraubt. Zur Sicherung dieser Schraubverbindung dient in einem Ausführungsbeispiel ein Klebstoff. In einem anderen Ausführungsbeispiel ist die Wand, die den den Zapfen aufnehmenden Hohlraum umschließt, an einer Stelle in eine Vertiefung des Zapfens eingedrückt. Durch diese Ausbildung der Zahnstange mit der Aufteilung der Zahnstange in zwei oder mehrere Funktionsbereiche aufweisende stangenförmige Teile werden zwar Erleichterungen und Verbesserungen bei der Herstellung gegenüber einer einstückigen Ausbildung der Zahnstange erreicht, die beschriebene Gewindeverbindung bringt aber auch Nachteile mit sich, u. a. einen entsprechenden Herstellungsaufwand und Beschränkungen bezüglich der Ausbildung der zu verbindenden Teile.

Eine Einrichtung der eingangs genannten Art geht aus der nicht vorveröffentlichten DE 10 2007 018 919 A1 hervor. Zur Verbindung des ersten und zweiten stangeförmigen Teils ist ein Verbindungsteil vorhanden, das erste und zweite Verbindungszapfen aufweist, die jeweils in einem Hohlraum des jeweiligen stangenförmigen Teils durch einen Presssitz gehalten sind. Durch den Presssitz des Verbindungsteils mit dem jeweiligen stangeförmigen Teil kann eine zuverlässige Verbindung zwischen dem ersten und dem zweiten stangenförmigen Teil erreicht werden.

Aus der DE 100 11 140 A1 geht eine Einrichtung hervor, welche stangenförmige Teile umfasst, von denen eines eine Zahnstange und eines eine Gewindestange ist. Endseitig besitzen diese stangenförmigen Teile Hohlräume, in denen Verbindungszapfen von Verbindungsteilen angeordnet sind, um die stangenförmigen Teile zusammenzuhalten.

Aufgabe der Erfindung ist es, bei einer Einrichtung der eingangs genannten Art erweiterte Einsatzmöglichkeiten bereitzustellen. Erfindungsgemäß gelingt dies durch eine Zahnstange bzw. Gewindestange mit den Merkmalen des Anspruchs 1.

Bei einer Zahnstange oder Gewindestange gemäß der Erfindung weist ein zwischen dem ersten und dem zweiten Verbindungszapfen sich befindender Abschnitt des Verbindungsteils zumindest über einen Bereich seines Umfangs, vorzugsweise über seinen gesamten Umfang, eine größere radiale Ausbildung als das erste und das zweite stangenförmige Teil im entsprechenden Umfangsbereich auf. Dadurch kann von diesem überstehenden Abschnitt des Verbindungsteils eine Funktion ausgeführt werden, d. h. dieser Abschnitt bildet einen Funktionsabschnitt des Verbindungsteils bzw. ein weiteres Funktionselement der Zahnstange. Beispielsweise können die überstehenden Seitenflächen des Funktionsabschnitts des Verbindungsteils, die vorzugsweise in axialer Richtung der Zahnstange bzw. Gewindestange ausgerichtet sind, Anschlagflächen zur Begrenzung der axialen Verschiebung der Zahnstange bzw. Gewindestange bilden. Der zwischen dem ersten und dem zweiten Verbindungszapfen bzw. zwischen dem ersten und dem zweiten stangenförmige Teil liegende zentrale Abschnitt des Verbindungsteils kann beispielsweise auch ein Getriebeglied, z. B. eines Schubgetriebes, oder einen Kolben einer Kolben-Zylinder-Einheit bilden.

Grundsätzlich denkbar und möglich ist es auch, dass der zwischen dem ersten und dem zweiten Verbindungszapfen sich befindende Abschnitt des Verbindungsteils nur über einen Teil seines Umfangs eine größere radiale Ausdehnung als das erste und zweite stangenförmige Teil im entsprechenden Umfangsabschnitt aufweist.

Vorzugsweise weist der zwischen dem ersten und dem zweiten Verbindungszapfen sich befindende Abschnitt des Verbindungsteils zumindest über einen Teil seiner Umfangserstreckung eine um mindestens 10%, vorzugsweise mindestens 20%, größere radiale Ausdehnung als das erste und zweite stangenförmigen Teil am jeweiligen benachbarten Endbereich hat.

Insbesondere kann das Verbindungsteil gerade ausgebildet sein mit achsial ausgerichteten, koaxial, bevorzugt genau in einer Achse, zueinander liegenden Verbindungszapfen. In Verbindung mit ebenfalls geraden stangenförmigen Teilen kann eine insgesamt gerade Zahnstange oder Gewindestange ausgebildet werden.

Vorteilhafterweise ist der Verbindungszapfen bzw. die Verbindungszapfen des Verbindungsteils wesentlich kürzer als das erste und zweite stangenförmige Teil, vorzugsweise beträgt die Länge des Verbindungszapfens weniger als das Vierfache, nochmals bevorzugt weniger als das Doppelte, jedoch immer mehr als die Hälfte des Betrages, des Außendurchmessers des Verbindungszapfens.

Vorzugsweise ist ein jeweiliger in einem Hohlraum durch einen Presssitz gehaltener Verbindungszapfen im Bereich des Presssitzes mit Materialerhebungen versehen, insbesondere Wülsten, Stegen, Zähnen oder dgl.. Die Höhen dieser Materialerhebungen liegen hierbei mit Vorzug im Bereich von 0,03 mm bis 0,4 mm. Zusätzlich oder statt dessen könnte auch die Wand des jeweiligen einen Verbindungszapfen aufnehmenden Hohlraums mit Materialerhebungen versehen sein, insbesondere Wülsten, Stegen, Zähnen o. dgl.. Die Höhen dieser Materialerhebungen liegen hierbei ebenfalls mit Vorzug im Bereich von 0,03 mm bis 0,4 mm.

Mit Vorteil werden diese Materialerhebungen durch einen Umformprozess, wie Rollieren oder Rändeln, in die Oberfläche des Verbindungszapfens und nach Möglichkeit auch in die Innenoberfläche des Hohlraums eingebracht. Der Vorteil besteht in den damit verbundenen Materialverfestigungen, was zur Reduktion von Spänen und der Verbesserung der Verbindung führt.

In einer vorteilhaften Ausführungsform der Erfindung ist die Außenkontur des Verbindungszapfens im Wesentlichen zylindermantelförmig, d. h. abgesehen von den vorzugsweise vorhandenen äußeren Materialerhebungen, endseitigen Anfasungen bzw. Einlaufschrägen, Nebenformelemente o. dgl. Ein den jeweiligen Verbindungszapfen aufnehmender innerer Hohlraum ist vorzugsweise im Wesentlichen zylindrisch ausgebildet, d. h. abgesehen von gegebenenfalls vorhandenen Materialerhebungen, einem endseitigen Einlauftrichter o. dgl..

Der zwischen dem jeweiligen Verbindungszapfen und dem jeweiligen stiftförmigen Teil ausgebildete Presssitz ist in axialer Richtung zumindest kraftschlüssig. Durch Ausnützung von Restelastizitäten ist es auch denkbar und möglich, eine in achsiale Richtung formschlüssig wirkende Komponente der Verbindung auszubilden, beispielsweise durch Entspannung eines Abschnitts einer an der den Hohlraum des stangenförmigen Teils begrenzenden Wand angeordneten, in Längsrichtung verlaufenden Materialerhebung, welcher Abschnitt bezogen auf die Einschubrichtung des Verbindungszapfens in den inneren Hohlraum hinter einer an der äußeren Oberfläche des Verbindungszapfens angeordneten, in Umfangsrichtung verlaufenden Materialerhebung liegt.

In Umfangsrichtung ist ein jeweiliger Verbindungszapfen im jeweiligen Hohlraum durch den Presssitz zumindest kraftschlüssig gehalten. Vorzugsweise ist die Verbindung zusätzlich formschlüssig ausgebildet. Beispielsweise kann dies durch in axialer Richtung verlaufende Materialerhebungen an der Außenfläche des Verbindungszapfens und/oder an der den Hohlraum umgebenden Wand in ihrem Bereich des Presssitzes erreicht werden, welche sich bei der Ausbildung des Presssitzes in das Material des anderen der über die Pressverbindung verbundenen Teile einformen bzw. eingraben. Vorzugsweise werden die hierbei ausgebildeten Vertiefungen nicht oder nur zu einem geringen Grad spanabhebend sondern vielmehr ganz oder zumindest überwiegend durch Materialverdrängung gebildet.

Mit Vorteil ist vor der umformenden Herstellung der Materialerhebungen der Innendurchmesser des zylindrisch ausgebildeten Hohlraums etwas größer als der Außendurchmesser des zylindermantelförmigen Verbindungszapfens, so dass beide Teile mit etwas Spiel ineinander geschoben werden könnten, wobei erst durch die mit der Erzeugung der Materialerhebungen, in zumindest eines der beiden Teile, verbundene Durchmesservergrößerung bzw. Durchmesserverkleinerung die für den Pressverband notwendige teilweise Überdeckung bewirkt wird. Dadurch wird es möglich Form- Maß- und Lageabweichungen der zylindrischen Innenform des Hohlraums und der zylindrischen Mantelfläche des Verbindungszapfens auszugleichen. Ferner wird eine Ausrichtung der zu fügenden Teile zueinander vereinfacht. Zusätzlich wird die Verbindung mit Vorzug so ausgelegt, dass eine Aufweitung des Außendurchmessers des Bereiches des Fügepartners, in den der Verbindungszapfen eindringt, nahezu verhindert ist. Dabei sollen die Werte der Aufweitung des Außendurchmessers unterhalb von 0,2mm besonders bevorzugt unterhalb von 0,05mm liegen. Dies reduziert das Materialvolumen, das entfernt werden muss, falls im Bereich der Fügestelle ein konstanter Außendurchmesser gefordert wird. Ferner senkt dies die Rissgefahr in der Wandung des Hohlraums, so dass die Verbindungsfestigkeit gewährleistet ist. Im Fall einer nichtzylindrischen Ausbildung des Verbindungszapfens und des Hohlraums gilt dies analog. Die nur geringe Aufweitung ist in diesem Fall sogar noch wichtiger, da nichtrunde Umfangskonturen eher zu einer Kerbwirkung neigen und sich leichter Risse ausbilden können.

In einer alternativen Ausführungsform ist es denkbar und möglich, die Verbindung der stangenförmigen Teile der Zahnstange mittels Schweißen, insbesondere Laserschweißen zu bewirken. Dabei wird das Verbindungsteil, das die Verbindungszapfen aufweist, zusätzlich oder alternativ zum Presssitz mit dem einen oder beiden stangenförmigen Teilen der Zahnstange verschweißt.

Im Sinne der Erfindung ist von dem Begriff "Zahnstange" auch eine Gewindestange umfasst, die zur Umformung der Drehbewegung in eine Translationsbewegung keine Verzahnung, sondern nur ein Gewinde für eine Gewindemutter, z. B. Kugelgewindemutter, oder einen Gewindetrieb, z. B. Kugelgewindetrieb, umfasst. Derartige Gewindestangen finden Anwendung bei Steer-by-wire Lenksystemen, bei denen die vom Steuerrad eingeleitete Drehbewegung mechanisch entkoppelt über eine Hilfskrafteinrichtung in eine Verschwenkung der Räder überführt wird. In der folgenden Beschreibung ist somit unter dem Begriff "Zahnstange" auch der Begriff "Gewindestange" subsumiert und unter einer Verzahnung als Funktionselement ist auch eine Ausbildung als Gewinde subsumiert.

Weitere Vorteile und Einzelheiten der Erfindung werden im Folgenden anhand der beiliegenden Zeichnung erläutert. In dieser zeigen:
- Fig. 1: ein erstes Ausführungsbeispiel einer Zahnstange gemäß der Erfindung, in Schräg- sicht;
- Fig. 2: einen Längsmittelschnitt im Verbindungsbereich der beiden stangenförmigen Tei- le;
- Fig. 3: die Zahnstange von Fig. 1 vor der Verbindung der Teile;
- Fig. 4: einen Längsmittelschnitt durch das Verbindungsteil;
- Fig. 5: ein Beispiel für eine vom Funktionsabschnitt des Verbindungsteils ausgeführte Funktion;
- Fig. 6a,: 6b; 7a, 7b; 8a, 8b; 9a, 9b weitere mögliche Ausführungsformen von Verbindungsteilen, jeweils in Ansicht und Schrägsicht;
- Fig. 10: ein weiteres Beispiel für eine vom Funktionsabschnitt des Verbindungsteils ausgeführte Funktion;
- Fig. 11: einen Längsmittelschnitt durch eine weitere Ausführungsvariante der Erfindung.

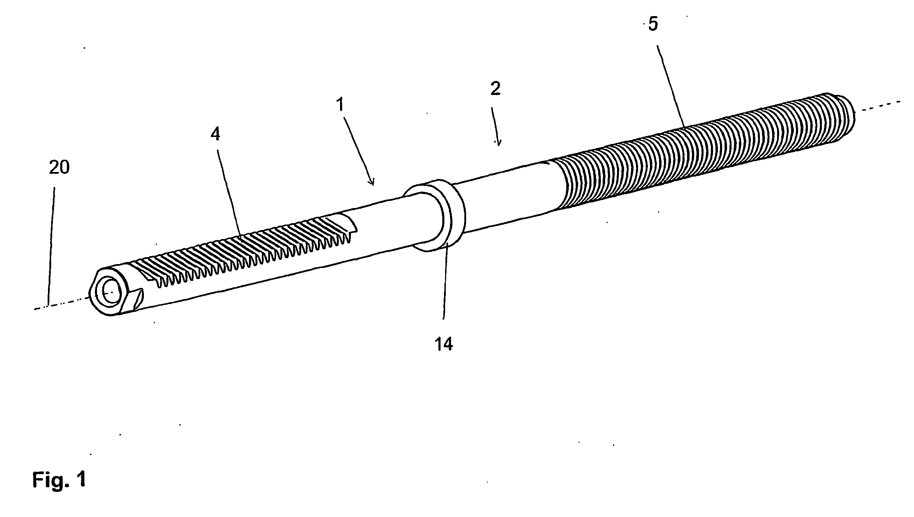

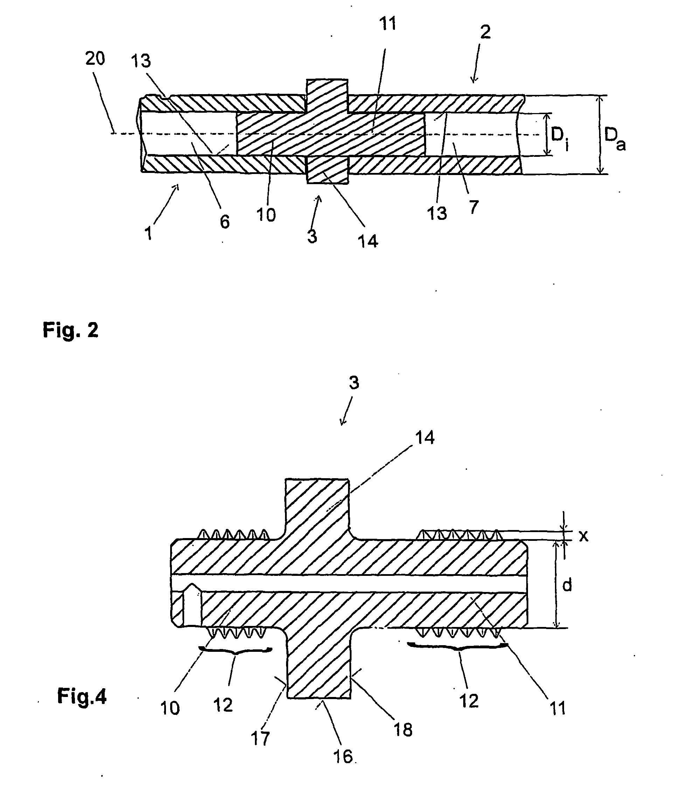

Ein erstes Ausführungsbeispiel einer Zahnstange gemäß der Erfindung, beispielsweise für den Einsatz in einer Lenkvorrichtung eines Kraftfahrzeuges, wird im Folgenden anhand der Fig. 1 bis 3 erläutert. Die Zahnstange umfasst ein erstes und ein zweites stangenförmiges Teil 1, 2, die mittels eines Verbindungsteils 3 miteinander verbunden sind. Das erste und das zweite stangenförmige Teil 1, 2 und das Verbindungsteil 3 besitzen eine gemeinsame Längsachse 20 (= die Längsachse der Zahnstange). Das erste stangenförmige Teil 1 besitzt als Funktionselement die Verzahnung 4 der Zahnstange. Die Verzahnung 4 erstreckt sich über einen Teil der gesamten Längserstreckung der Zahnstange und dieser Teil der Längserstreckung der Zahnstange bildet somit einen ersten Funktionsbereich der Zahnstange.

Das zweite stangenförmige Teil besitzt als Funktionselement ein Gewinde 5, beispielsweise für einen Kugelgewindetrieb. Dieses erstreckt sich über einen Teil der gesamten Längserstreckung der Zahnstange und dieser Teil der Längserstreckung der Zahnstange stellt somit einen zweiten Funktionsbereich der Zahnstange dar, der in einem anderen Abschnitt der Längserstreckung der Zahnstange liegt als der erste Funktionsbereich.

Das erste und das zweite stangenförmige Teil 1, 2 bilden somit jeweils einen unterschiedlichen Längsabschnitt der Zahnstange.

Das zweite stangenförmige Teil 2 könnte auch eine andere Art von Funktionselement bzw. einen in anderer Weise ausgebildeten Funktionsbereich aufweisen. Beim Einsatz in einer Lenkvorrichtung eines Kraftfahrzeuges kann der Funktionsbereich des zweiten stangenförmigen Teils 2 insbesondere Teil einer hydraulischen Lenkkraftunterstützung sein.

Das erste und das zweite stangenförmige Teil 1, 2 weisen jeweils einen in achsialer Richtung verlaufenden Hohlraum 6, 7 auf. Diese münden an den zueinander gerichteten Verbindungsenden 8, 9 der stangenförmigen Teile 1, 2. Im Ausführungsbeispiel gemäß den Fig. 1 bis 3 erstrecken sich diese Hohlräume 6, 7 durchgehend über die gesamten Längen der stangenförmigen Teile 1, 2, d. h. die stangenförmigen Teile 1, 2 sind als Rohre ausgebildet. Der Hohlraum 6 des ersten und/oder der Hohlraum 7 des zweiten stangenförmigen Teils 1, 2 könnten sich aber auch nur über einen Teil der achsialen Länge des stangenförmigen Teils 1, 2 erstrecken.

Das Verbindungsteil 3 besitzt erste und zweite Verbindungszapfen 10, 11, die von einem zentralen Abschnitt 14 in entgegengesetzte Richtungen axial abstehen. Der zentrale Abschnitt 14, der sich bezogen auf die Längsachse 20 zwischen dem ersten und zweiten Verbindungszapfen 10, 11 befindet, besitzt einen größeren äußeren Durchmesser als die Verbindungszapfen 10,11. Mit anderen Worten könnte auch gesagt werden, dass das Verbindungsteil 3 im Bereich zwischen den Verbindungszapfen 10, 11 einen überstehenden Ringbund aufweist. Im Ausführungsbeispiel gemäß den Fig. 1 bis 4 ist die die Längsachse 20 umgebende Außenfläche 16 des zentralen, überstehenden Abschnitts 14 zylindermantelförmig ausgebildet. Die Seitenflächen 17, 18 sind in axialer Richtung ausgerichtet

Zur Verbindung des ersten und zweiten stangenförmigen Teils 1, 2 werden die Verbindungszapfen 10, 11 in den jeweiligen Hohlraum 6, 7 eingepresst, so dass die Verbindungszapfen 10, 11 im verbundenen Zustand in den Hohlräumen 6, 7 durch einen jeweiligen Presssitz gehalten sind. Der zentrale Abschnitt 14 befindet sich im verbundenen Zustand der Teile 1, 2, 14 zwischen dem ersten und dem zweiten stangenförmigen Teil 1, 2. Vorzugsweise liegen im verbundenen Zustand die Seitenflächen 17, 18 des überstehenden Abschnitts 14 am ersten und zweiten stangenförmigen Teil 1, 2 stirnseitig an.

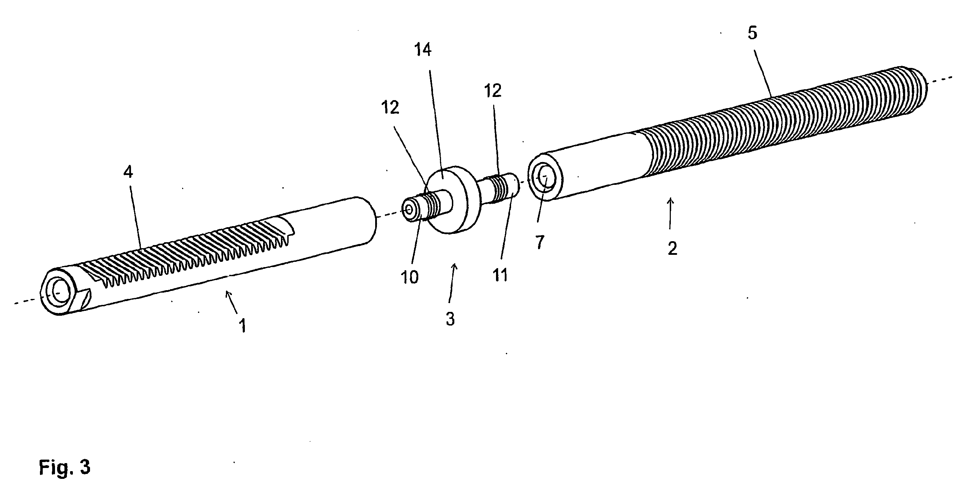

Die Verbindungszapfen 10, 11 des Verbindungsteils 3 werden bei dessen Herstellung mit Materialerhebungen 12 versehen, vgl. Fig. 3. Diese Materialerhebungen 12 werden beim Einpressen des jeweiligen Verbindungszapfens 10, 11 in den jeweiligen Hohlraum 6, 7 verformt, wodurch ein starker und sicherer Presssitz ausgebildet werden kann.

Beispielsweise können die Materialerhebungen 12 von Kämmen, Stegen, Zähnen, Wülsten o. dgl. gebildet werden. Im Ausführungsbeispiel gemäß den Fig. 1 bis 3 verlaufen diese Materialerhebungen in Umfangsrichtung. Hierbei können die Kämme, Stege oder Zähne einen ringförmigen Verlauf besitzen oder es kann eine Steigung nach Art eines Gewindes vorgesehen sein. Solche Materialerhebungen 12 können auch als Rollierung oder als ringförmiger Nutenrändel bezeichnet werden.

Die von den Wülsten, Stegen, Zähnen o. dgl. ausgebildeten Materialerhebungen 12 können auch eine andere Form aufweisen, beispielsweise in achsialer Richtung verlaufen. Derartige achsial verlaufende Materialerhebungen werden auch als achsiales Nutenrändel bezeichnet. Auch in eine schräge Richtung verlaufende Stege, Wülste oder Zähne oder andere Arten von Materialerhebungen, beispielsweise Diamanträndel, könnten vorgesehen sein.

Die Materialerhebungen 12 können vorzugsweise durch Materialverdrängung ausgebildet werden, insbesondere mittels rollender Werkzeuge, wie sie auch zum Herstellen von gerollten Gewinden dienen.

Zusätzlich zu den Materialerhebungen 12 der Verbindungszapfen 10, 11 oder statt dessen kann die den jeweiligen Hohlraum 6, 7 begrenzende Wand 13, zumindest in dem Abschnitt, in welchem die Pressverbindung mit dem Verbindungszapfen 10, 11 erfolgt, mit Materialerhebungen versehen sein. Diese Materialerhebungen können die bereits im Zusammenhang mit den Verbindungszapfen 10, 11 beschriebenen Formen aufweisen. Eine bevorzugte Ausführungsform von solchen Materialerhebungen an der Wand 13 des jeweiligen Hohlraums 6, 7 sind hierbei in achsialer Richtung verlaufende Zähne. Solche Zähne können beim Einpressen des zugehörigen Verbindungszapfens 10, 11 Vertiefungen in diesem bzw. in dessen Materialerhebungen ausformen. Durch diese Vertiefungen kann eine gegen eine relative Verdrehung des Verbindungszapfens 10, 11 gegenüber der Wand 13 formschlüssig wirkende Verbindung ausgebildet werden. Vorzugsweise werden solche Vertiefungen beim Einpressen des Verbindungszapfens 10, 11 nicht oder nur zu einem geringen Grad spanabhebend sondern ganz oder überwiegend durch Materialverdrängung gebildet.

Im bevorzugten Fall, bei dem die Materialerhebungen durch Umformung ausgebildet werden, ist der Außendurchmesser d des zylindrischen Verbindungszapfens dabei etwas kleiner als der Innendurchmesser Dᵢ des zylindrischen Hohlraums, so dass ohne die umlaufenden Materialerhebungen, der Verbindungszapfen mit etwas Spiel in den Hohlraum eingeschoben werden kann. Erst durch die Materialerhebungen am Verbindungszapfen, deren äußerer Umfang einen Durchmesser d+2x beschreiben, wird das für den Presssitz erforderliche Übermaß erreicht. Alternativ oder auch in Kombination gilt dies für die Materialerhebungen entlang des Innendurchmessers des Hohlraums. Das Übermaß wird dabei bevorzugt mit einer Größe im Bereich von 0,05mm bis 0,25mm dimensioniert, besonders bevorzugt etwa bei 0,1-0,15mm.

Mit Vorteil wird der Presssitz derart ausgelegt, dass der Außendurchmesser Dₐ des stangenförmigen Teils sich nicht um mehr als 0,2mm, bevorzugt weniger als 0,1 mm expandiert.

Analoges gilt auch für nichtzylindrische Querschnitte des Verbindungszapfens. In diesem Fall sind als Durchmesser der doppelte Abstand des Außenabschnitts im jeweiligen Winkelabschnitt von der Längsachse angesetzt, wie es bei der Verwendung von Polarkoordinaten üblich ist.

Durch den Presssitz der Verbindungszapfen 10, 11 in den Hohlräumen 6, 7 wird eine kraftschlüssig wirkende Verbindung ausgebildet. Die Rückfederung bewirkt zusätzlich eine in axiale Richtung formschlüssig wirkende Komponente der Verbindung, beispielsweise durch Entspannung eines Abschnitts einer in Längsrichtung verlaufenden Materialerhebung an der Wand 13, welcher Abschnitt bezogen auf die Einschubrichtung hinter einer in Umfangsrichtung verlaufenden Materialerhebung 12 des Verbindungszapfens 10, 11 liegt.

Die Verbindung des jeweiligen stangenförmigen Teils 1, 2 mit dem Verbindungsteil 3 erfolgt in einfacher Weise durch axiales Zusammenpressen. Hierbei kann ein Verbindungszapfen 10, 11 des Verbindungsteils 3 zunächst in eines der stangenförmigen Teile 1, 2 und danach der andere Verbindungszapfen 10, 11 in das andere stangenförmige Teil 1, 2 eingepresst werden.

Die Erfindung ermöglicht auch die Herstellung von Zahnstangen mit nichtzylindrischen Querschnittsflächen. Dabei ist es sowohl möglich, stangenförmige Teile 1, 2 mit unterschiedlichen Querschnitten, als auch stangenförmige Teile 1, 2 mit im Wesentlichen gleichen Querschnitten zu verbinden. Dadurch ist es möglich, jeden Längsabschnitt der Zahnstange in einfacher Weise mit dem für die jeweilige Anwendung optimalen Querschnitt auszulegen und herzustellen und im Anschluss die Einzelteile zu einer vollständigen Zahnstange zusammen zu fügen. Je nach Dimensionierung kann dabei sowohl ein im Wesentlichen zylindrischer Verbindungszapfen 10, im Zusammenwirken mit einem im Wesentlichen zylindrischen oder aber auch im Zusammenwirken mit einem an die Außenform angepassten Hohlraum 6, als auch ein der Außenform angepasster Verbindungszapfen 10 zur Verbindung dienen.

Der Hohlraum 6, 7 des ersten und/oder zweiten stangenförmigen Teils 1, 2 kann auch nicht durchgehend über die Länge des stangenförmigen Teils 1, 2 ausgebildet sein. Der Hohlraum 6 des ersten stangenförmigen Teils 1 ist hier in Form eines vom Verbindungsende 8 stirnseitig ausgehenden Sacklochs ausgebildet. Statt dessen oder zusätzlich kann eine solche Ausbildung auch für das zweite stangenförmige Teil 2 vorgesehen sein.

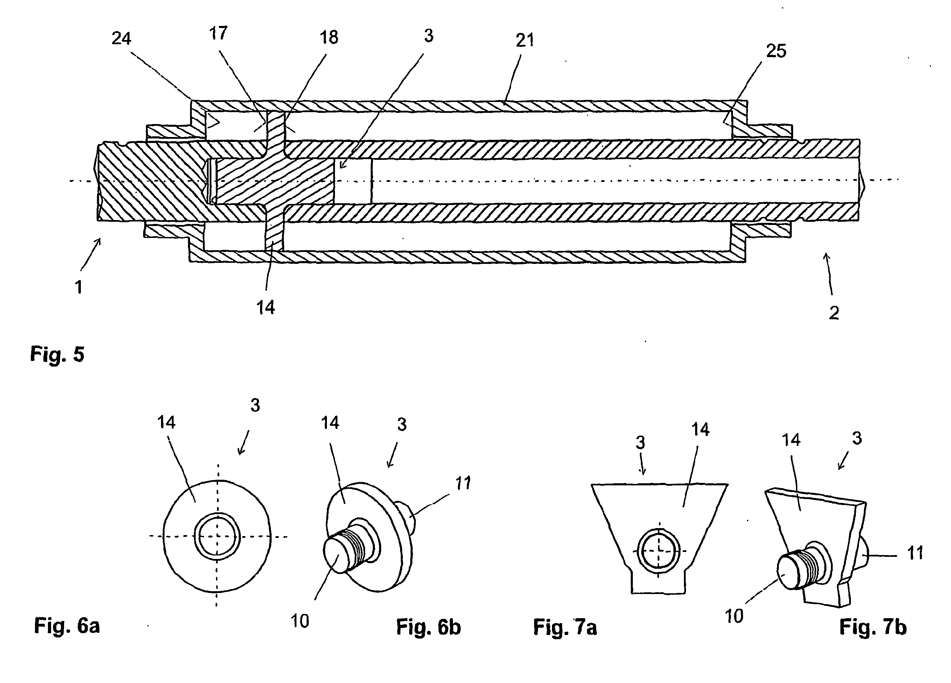

Fig. 5 veranschaulicht beispielhaft eine mögliche vom zentralen überstehenden Abschnitt 14 des Verbindungsteils 1 ausgeübte Funktion. Hier dienen die Seitenflächen 17, 18 des zentralen Abschnitts 14 im über das erste und zweite stangenförmige Teil 1, 2 überstehenden Bereich jeweils als Anschlag zur Begrenzung der axialen Verschiebbarkeit der Zahnstange. Die Gegenanschläge 24, 25 können beispielsweise an einem die Zahnstange umgebenden Gehäuse 21 angeordnet sein. Bei einem Einsatz der Zahnstange in einem Kraftfahrzeug ist das Gehäuse 21 karosseriefest.

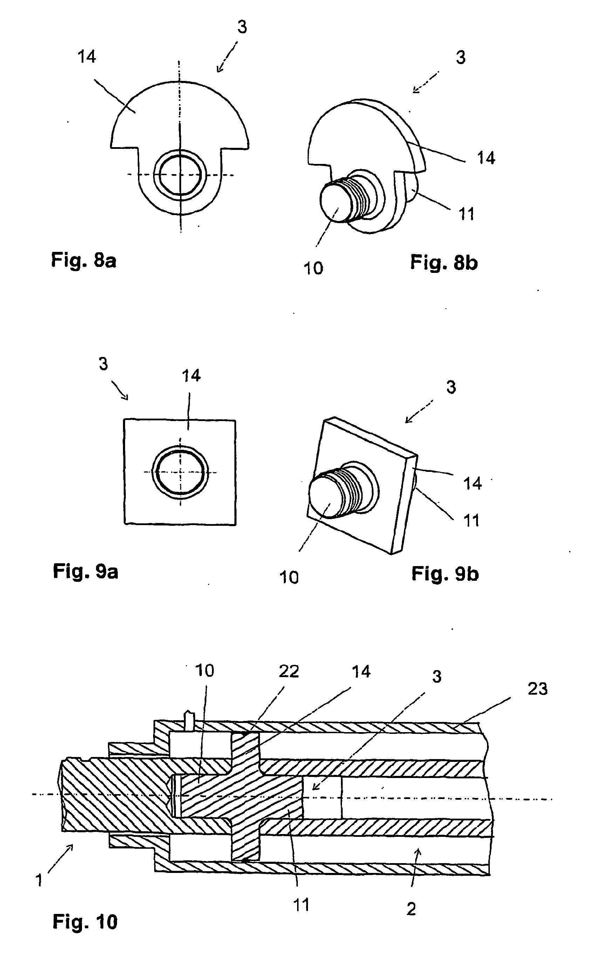

In den Fig. 6a, 6b bis 9a, 9b sind beispielhaft unterschiedliche Außenkonturen des Funktionsabschnitts 14 des Verbindungsteils 3 bzw. unterschiedliche Ausbildungen der die Längsachse 20 umgebenden Außenfläche 16 des Funktionsabschnitts 14 des Verbindungsteils 3 dargestellt. In den Fig. 6a, 6b ist eine bereits beschriebene kreisringförmige Ausbildung des überstehenden Bunds dargestellt. Fig. 7a, 7b und 8a, 8b zeigen Ausführungsformen mit nicht umfangssymetrischer Ausbildung des überstehenden Abschnitts 14. Fig. 9a, 9b zeigen eine quaderförmige Ausbildung des Abschnitts 14, wobei die in Stirnansicht gesehene Umfangskontur beispielsweise quadratisch sein kann.

Solche mit unterschiedlichen Umfangskonturen ausgebildete Funktionsabschnitte 14, können beispielsweise Getriebeglieder, z. B. eines Schubgetriebes, darstellen.

Fig. 10 zeigt eine weitere mögliche Ausführungsvariante. Hier bildet der Abschnitt 14, der an seinem äußeren Umfang mit einer Dichtung 22 versehen ist einen Kolben, der in einem Zylinder 23 verschiebbar ist. Bei einem solchen Ausführungsbeispiel könnte der Abschnitt 14 beispielsweise ein Funktionselement zur Einbringung einer Hilfskraft bei einer Lenkung darstellen. Auch eine autonome Lenkfunktion könnte in dieser Weise bereitgestellt werden.

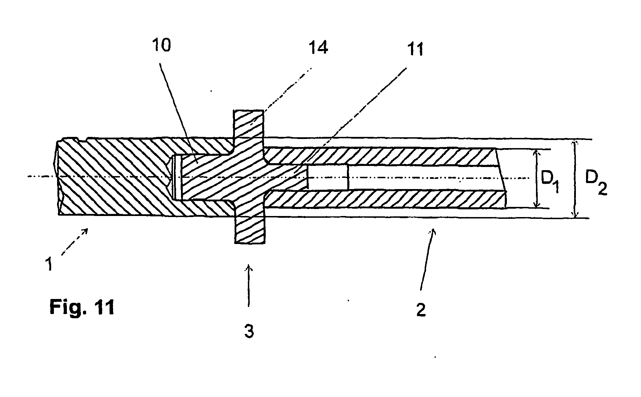

Fig. 11 verdeutlicht eine Ausführungsform, bei der das erste stangenförmige Teil 1 einen Außendurchmesser D1 und das zweite stangenförmige Teil 2 einen Außendurchmesser D2 aufweist, wobei die beiden Außendurchmesser D1 und D2 unterschiedliche Werte aufweisen.

Die beiden stangenförmigen Teile 1, 2 können aus dem selben Material, beispielsweise Stahl, oder auch aus unterschiedlichen Materialien, beispielsweise unterschiedlichen stählen bestehen. Durch eine Ausbildung aus unterschiedlichen Materialien können die stangenförmigen Teile 1, 2 jeweils an die von ihnen auszuführende Funktion angepasst werden.

Das Verbindungsteil 3 kann aus dem gleichen Material, beispielsweise Stahl, wie die beiden stangenförmigen Teile 1, 2 oder eines dieser beiden Teile 1, 2 bestehen oder aus einem unterschiedlichen Material, beispielsweise einem unterschiedlichen Stahl bestehen.

Zur zusätzlichen Sicherung der Pressverbindung zwischen dem Verbindungsteil 3 und einem oder beiden stangenförmigen Teilen 1, 2 könnte das jeweilige stangenförmige Teil 1, 2 nach dem Einpressen des Verbindungszapfens 10, 11 im Verbindungsbereich mit dem Verbindungszapfen 10, 11 mit einer radialen Eindrückung versehen sein, die in eine Vertiefung im Verbindungszapfen 10, 11 ragt.

Das Verbindungsteil 3 könnte auch einen über seine Länge durchgehenden, an den stirnseitigen Enden seiner beiden Verbindungszapfen 10, 11 mündenden inneren Kanal aufweisen.

Das zweite stangenförmige Teil 2 kann auch andere Funktionselemente als ein Gewinde 5 aufweisen. Beispielsweise könnte es mit einem Kolben als Funktionselement versehen sein oder das Funktionselement könnte von einer äußeren Führungsfläche gebildet werden, welche in Verbindung mit einem Führungsteil zur Ausbildung einer axialen Führung der Zahnstange dient.

Weiters kann in allen gezeigten Ausführungsbeispielen am vom ersten stangenförmigen Teil 1 abgelegenen Ende des zweiten stangenförmigen Teils 2 als Funktionselement ein Verbindungselement zur Verbindung mit einem von der Zahnstange betätigten Teil angebracht sein. Dieses Funktionselement kann auch das einzige Funktionselement des zweiten stangenförmigen Teils 2 sein.

Das zweite stangenförmige Teil 2 kann am vom ersten stangenförmigen Teil 1 abgelegenen Ende auch mit einem weiteren stangenförmigen Teil verbunden sein, insbesondere durch eine der Verbindung zwischen dem ersten und dem zweiten stangenförmigen Teil 1, 2 entsprechende Verbindung. Hierbei kann die einzige Funktion des zweiten stangenförmigen Teils 2 auch die Verbindungsfunktion mit diesem weiteren stangenförmigen Teil sein, welcher ein weiteres Funktionselement aufweisen kann.

An dem vom zweiten stangenförmigen Teil abgelegenen Ende des ersten stangenförmigen Teils 1 kann dieses mit einem oder mehreren weiteren stangenförmigen Teilen verbunden sein, insbesondere durch eine der Verbindung zwischen dem ersten und dem zweiten stangenförmigen Teil 1, 2 entsprechende Verbindung. Mindestens eines dieser weiteren stangenförmigen Teile kann ein weiteres Funktionselement aufweisen.

Auf diese Weise kann aus mehr als zwei Einzelteilen, die separat hergestellt sind, mit dem erfindungsgemäßen Verfahren eine Zahnstange gebildet werden.

Unterschiedliche andere Arten von Materialerhebungen könnten an den Verbindungszapfen 10, 11 und/oder an den Wänden der Hohlräume 6, 7 im Verbindungsbereich vorgesehen sein. Beispielsweise können an den Verbindungszapfen 10, 11 in axialer Richtung verlaufende Zähne, Stege oder Wülste vorhanden sein.

Eine rohrförmige Ausbildung des ersten und/oder zweiten stangeförmigen Teils 1, 2 könnte auch durch Umformung eines ebenen Bleches gebildet werden, das rohrförmig gebogen wird und die Längsachse 20 umgibt. Die miteinander in Anlage kommenden Ränder des Blechs können hierbei durch eine Schweißnaht miteinander verbunden sein.

Alternativ zur Ausbildung des ersten und/oder zweiten stangenförmigen Teils 1, 2 mit einer im Wesentlichen zylindrischen Außenfläche, kann das vorgängig beschriebene Verfahren auch für die Ausbildung anderer Querschnittsformen angewendet werden.

Vorzugsweise ist jeder der einen Verbindungszapfen 10, 11 aufnehmenden Hohlräume 6, 7 anschließend an das Verbindungsende 8, 9 mit einer trichterförmigen Erweiterung versehen, um das Einpressen eines Verbindungszapfens 10, 11 zu erleichtern. Zusätzlich oder statt dessen kann ein jeweiliger Verbindungszapfen 10, 11 zu seinem Ende hin eine Verjüngung aufweisen.

### Legende

### zu den Hinweisziffern:

- 1: erstes stangenförmiges Teil
- 2: zweites stangenförmiges Teil
- 3: Verbindungsteil
- 4: Verzahnung
- 5: Gewinde
- 6: Hohlraum
- 7: Hohlraum
- 8: Verbindungsende
- 9: Verbindungsende
- 10: Verbindungszapfen
- 11: Verbindungszapfen
- 12: Materialerhebung
- 13: Wand
- 14: Abschnitt
- 15: Anlagefläche
- 16: Außenfläche
- 17: Seitefläche
- 18: Seitenfläche
- 20: Längsachse
- 21: Gehäuse
- 22: Dichtung
- 23: Zylinder
- 24: Gegenanschlag
- 25: Gegenanschlag
- d: Außendurchmesser
- Dᵢ: Innendurchmesser
- Dₐ: Außendurchmesser
- x: Abstand

## Patentansprüche

1. Zahnstange oder Gewindestange, insbesondere für eine Lenkvorrichtung für ein Kraftfahrzeug, welche ein erstes stangenförmiges Teil (1), das als Funktionselement der Zahnstange oder Gewindestange mindestens ein Element zur Umwandlung einer Rotations- in eine Translationsbewegung, insbesondere eine Verzahnung (4) und/oder ein Gewinde für den Eingriff einer Gewindemutter oder eines Gewindetriebs, aufweist, und ein zweites stangenförmiges Teil (2) umfasst, das mit dem ersten stangenförmigen Teil (1) verbunden ist und das vorzugsweise mindestens ein weiteres Funktionselement der Zahnstange oder Gewindestange aufweist, wobei das erste und das zweite stangenförmige Teil (1, 2) jeweils einen an einem Verbindungsende des jeweiligen stangenförmigen Teils (1, 2) mündenden Hohlraum (6, 7) aufweisen und die Verbindung des ersten mit dem zweiten stangenförmigen Teil (1, 2) über ein separates Verbindungsteil (3) erfolgt, welches erste und zweite Verbindungszapfen (10, 11) aufweist, von denen der erste Verbindungszapfen (10) im am Verbindungsende (8) mündenden Hohlraum (6) des ersten stangenförmigen Teils (1) und der zweite Verbindungszapfen (11) im am Verbindungsende (9) mündenden Hohlraum (7) des zweiten stangenförmigen Teils (2) jeweils durch einen Presssitz gehalten ist, **dadurch gekennzeichnet, dass** ein zwischen dem ersten und dem zweiten Verbindungszapfen (10, 11) liegender Abschnitt (14) des Verbindungsteils (3) zumindest über einen Bereich seines Umfangs eine größere radiale Ausdehnung als das erste und das zweite stangenförmige Teil (1, 2) im entsprechenden Umfangsbereich aufweist.

2. Zahnstange oder Gewindestange nach Anspruch 1, **dadurch gekennzeichnet, dass** der zwischen dem ersten und zweiten Verbindungszapfen (10, 11) liegender Abschnitt des Verbindungsteils (3) über den gesamten Umfang eine größere radiale Ausdehnung als das erste und zweite stangenförmige Teil (1, 2) aufweist.

3. Zahnstange oder Gewindestange nach Anspruch 1 oder 2, **dadurch gekennzeichnet, dass** der zwischen dem ersten und zweiten Verbindungszapfen (10, 11) angeordnete Abschnitt (14) des Verbindungsteils (3) eine zylindermantelförmige Außenfläche (16) aufweist.

4. Zahnstange oder Gewindestange nach einem der Ansprüche 1 bis 3, **dadurch gekennzeichnet, dass** das erste und zweite stangenförmige Teil (1, 2) unterschiedliche Durchmesser aufweisen.

5. Zahnstange oder Gewindestange nach einem der Ansprüche 1 bis 4, **dadurch gekennzeichnet, dass** das erste und zweite stangenförmige Teil (1, 2) unterschiedliche Querschnitte aufweisen.

6. Zahnstange oder Gewindestange nach einem der Ansprüche 1 bis 5, **dadurch gekennzeichnet dass** das erste und zweite stangenförmige Teil (1, 2) aus unterschiedlichen Materialien bestehen.

7. Zahnstange oder Gewindestange nach einem der Ansprüche 1 bis 6, **dadurch gekennzeichnet, dass** mindestens ein Verbindungszapfen (10,11), vorzugsweise jeder der Verbindungszapfen (10,11), Materialerhebungen (12) aufweist.

8. Zahnstange oder Gewindestange nach einem der Ansprüche 1 bis 7, **dadurch gekennzeichnet, dass** das Verbindungsteil (3) gerade ausgebildet ist und die Verbindungszapfen (10,11) sich in entgegengesetzte Richtungen axial erstrecken.

9. Zahnstange nach einem der Ansprüche 1 bis 6, **dadurch gekennzeichnet, dass** das erste stangenförmige Teil (1) und/oder das zweite stangenförmige Teil (2) schweißtechnisch mit dem Verbindungsteil (3) verbunden sind.

10. Zahnstange nach einem der Ansprüche 1 bis 9, **dadurch gekennzeichnet, dass** der zwischen dem ersten und dem zweiten Verbindungszapfen (10, 11) liegende Abschnitt (14) des Verbindungsteil (3), der zumindest über einen Bereich seines Durchmessers eine größere radiale Ausdehnung als das erste und das zweite stangenförmige Teil (1, 2) im entsprechenden Umfangsbereich aufweist, einen Funktionsabschnitt des Verbindungsteils (3) bildet wobei die überstehenden Seitenflächen dieses Funktionsabschnitts Anschlagflächen zur Begrenzung der achsialen Verschiebung der Zahnstange oder Gewindestange bilden oder dieser Funktionsabschnitt ein Getriebeglied oder einen Kolben einer Kolben-Zylinder-Einheit bildet.

11. Zahnstange oder Gewindestange nach einem der Ansprüche 1 bis 10, **dadurch gekennzeichnet, dass** der zwischen dem ersten und dem zweiten Verbindungszapfen (10, 11) liegende Abschnitt (14) des Verbindungsteils (3), zumindest über einen Bereich seines Umfangs eine um mindestens 10%, vorzugsweise mindestens 20 %, größere radiale Ausdehnung als benachbarte Bereiche der ersten und das zweiten stangenförmigen Teile (1, 2) im entsprechenden Umfangsbereich aufweist.

12. Lenkvorrichtung für ein Kraftfahrzeug mit einer Zahnstange oder Gewindestange nach einem der Ansprüche 1 bis 11.

## Claims

1. A gear rack or threaded rod, in particular for a steering device for a motor vehicle, which comprises a first rod-shaped part (1) having, as a functional element of the gear rack or threaded rod, at least one element to convert a rotary motion into a translatory motion, in particular toothing (4) and/or a thread for engagement of a threaded nut or a threaded drive, and a second rod-shaped part (2) connected to the first rod-shaped part (1) and preferably having at least one further functional element of the gear rack or threaded rod, wherein the first and the second rod-shaped part (1, 2) each have a cavity (6, 7) issuing at a connection end of the respective rod-shaped part (1, 2) and the connection of the first to the second rod-shaped part (1, 2) takes place via a separate connection part (3) having first and second connection pegs (10, 11) of which the first connection peg (10) is held by a force fit in the cavity (6), issuing at the connection end (8), of the first rod-shaped part (1) and the second connection peg (11) is held by a force fit in the cavity (7), issuing at the connection end (9), of the second rod-shaped part (2), **characterised in that** a portion (14), lying between the first and the second connection peg (10, 11), of the connection part (3) has, over at least a region of its circumference, a greater radial extension than the first and the second rod-shaped part (1, 2) in the corresponding circumferential region.

2. A gear rack or threaded rod according to claim 1, **characterised in that** the portion, lying between the first and second connection peg (10, 11), of the connection part (3) has over the entire circumference a greater radial extension than the first and second rod-shaped part (1, 2).

3. A gear rack or threaded rod according to claim 1 or 2, **characterised in that** the portion (14), arranged between the first and second connection peg (10, 11), of the connection part (3) has an outer surface (16) in the form of a cylindrical casing.

4. A gear rack or threaded rod according to any one of claims 1 to 3, **characterised in that** the first and second rod-shaped part (1, 2) differ in diameter.

5. A gear rack or threaded rod according to any one of claims 1 to 4, **characterised in that** the first and second rod-shaped part (1, 2) differ in cross-section.

6. A gear rack or threaded rod according to any one of claims 1 to 5, **characterised in that** the first and second rod-shaped part (1, 2) consist of different materials.

7. A gear rack or threaded rod according to any one of claims 1 to 6, **characterised in that** at least one connection peg (10, 11), preferably each of the connection pegs (10, 11), has material elevations (12).

8. A gear rack or threaded rod according to any one of claims 1 to 7, **characterised in that** the connection part (3) is straight and the connection pegs (10, 11) extend axially in opposite directions.

9. A gear rack according to any one of claims 1 to 6, **characterised in that** the first rod-shaped part (1) and/or the second rod-shaped part (2) are connected to the connection part (3) by welding.

10. A gear rack according to any one of claims 1 to 9, **characterised in that** the portion (14), lying between the first and the second connection peg (10, 11), of the connection part (3), which portion has, over at least a region of its diameter, a greater radial extension than the first and the second rod-shaped part (1, 2) in the corresponding circumferential region, forms a functional portion of the connection part (3), wherein the protruding lateral faces of this functional portion form stop faces to limit the axial displacement of the gear rack or threaded rod or this functional portion forms a gearing member or a piston of a piston/cylinder unit.

11. A gear rack or threaded rod according to any one of claims 1 to 10, **characterised in that** the portion (14), lying between the first and the second connection peg (10, 11), of the connection part (3) has, over at least a region of its circumference, a radial extension which is greater by at least 10%, preferably at least 20%, than adjacent regions of the first and the second rod-shaped parts (1, 2) in the corresponding circumferential region.

12. A steering device for a motor vehicle having a gear rack or threaded rod according to any one of claims 1 to 11.

## Revendications

1. Crémaillère ou tige filetée, notamment pour un dispositif de direction d'un véhicule automobile comprenant :
- une première pièce en forme de barre (1) ayant comme élément fonctionnel de la crémaillère ou de la tige filetée, au moins un élément pour convertir un mouvement de rotation en un mouvement de translation, notamment une denture (4) et/ou un filetage pour la prise d'un écrou ou d'une transmission à vis, et
- une seconde pièce (2) en forme de barre, reliée à la première pièce (1) en forme de barre et ayant de préférence au moins un autre élément fonctionnel de la crémaillère ou de la tige filetée,
- la première et la seconde pièce en forme de barre (1, 2) ayant une cavité (6, 7) respective débouchant à l'extrémité de liaison de la pièce en forme de barre (1, 2) respective, et
- la liaison de la première pièce en forme de barre avec la seconde pièce en forme de barre (1, 2), se fait par une pièce de liaison (3), distincte, ayant un premier et un second goujon de liaison (10, 11),
- le premier goujon de liaison (10) étant tenu par un siège pressé dans la cavité (6) de la première pièce en forme de barre (1), cette cavité débouchant à l'extrémité de liaison (8) et le second goujon de liaison (11) est tenu par un siège pressé dans la cavité (7) débouchant dans l'extrémité de liaison (9),
crémaillère **caractérisée en ce que**
le segment (14) de la pièce de liaison (3) situé entre le premier et le second goujon de liaison (10, 11) présente au moins sur une zone de sa périphérie, une extension radiale plus grande que la première et la seconde pièce en forme de barre (1, 2) dans la zone périphérique correspondante.

2. Crémaillère ou tige filetée selon la revendication 1,
**caractérisée en ce que**
le segment de la pièce de liaison (3) situé entre le premier et le second goujon de liaison (10, 11) présente sur toute la périphérie, une extension radiale plus grande que la première et la seconde pièce en forme de barre (1, 2).

3. Crémaillère ou tige filetée selon la revendication 1 ou 2,
**caractérisée en ce que**
le segment (14) de la pièce de liaison (3) situé entre le premier et le second goujon de liaison (10, 11) présente une surface extérieure (16) en forme d'enveloppe cylindrique.

4. Crémaillère ou tige filetée selon l'une des revendications 1 à 3,
**caractérisée en ce que**
la première et la seconde pièce en forme de barre (1, 2), ont des diamètres différents.

5. Crémaillère ou tige filetée selon l'une des revendications 1 à 4,
**caractérisée en ce que**
la première et la seconde pièce en forme de barre (1, 2), ont des sections différentes.

6. Crémaillère ou tige filetée selon l'une des revendications 1 à 5,
**caractérisée en ce que**
la première et la seconde pièce en forme de barre (1, 2) sont réalisées dans des matériaux différents.

7. Crémaillère ou tige filetée selon l'une des revendications 1 à 6,
**caractérisée en ce qu'**
au moins un goujon de liaison (10, 11) et de préférence chacun des goujons de liaison (10, 11) comporte des bossages (12) réalisés dans la matière.

8. Crémaillère ou tige filetée selon l'une des revendications 1 à 7,
**caractérisée en ce que**
la pièce de liaison (3) est droite et les goujons de liaison (10, 11) s'étendent axialement dans des directions opposées.

9. Crémaillère ou tige filetée selon l'une des revendications 1 à 6,
**caractérisée en ce que**
la première pièce en forme de barre (1) et/ou la seconde pièce en forme de barre (2), sont reliées à la pièce de liaison (3) par soudage.

10. Crémaillère selon l'une des revendications 1 à 9,
**caractérisée en ce que**
le segment (14) de la pièce de liaison (3) se situe entre le premier et le second goujon de liaison (10, 11), et il a au moins sur une zone de son diamètre, une extension radiale plus grande que la première et la seconde pièce en forme de barre (1, 2) selon la zone périphérique, en constituant un segment fonctionnel de la pièce de liaison (3),
les surfaces latérales en saillie de ce segment fonctionnel, constituant des surfaces de butée pour limiter le coulissement axial de la crémaillère ou de la tige filetée ou ce segment fonctionnel constitue un élément de transmission ou le piston d'un ensemble piston-cylindre.

11. Crémaillère ou tige filetée selon l'une des revendications 1 à 10,
**caractérisée en ce que**
le segment (14) de la pièce de liaison (3) situé entre le premier et le second goujon de liaison (10, 11) présente au moins sur une zone de sa périphérie, une extension radiale plus grande d'au moins 10 % et de préférence d'au moins 20 % que celle des zones voisines de la première et de la seconde pièce en forme de barre (1, 2) dans la zone périphérique correspondante.

12. Dispositif de direction de véhicule automobile équipé d'une crémaillère ou tige filetée selon l'une des revendications 1 à 11.
